# EUROPEAN PATENT APPLICATION

(11) **EP 4 155 264 A1**
(43) Date of publication of application: **29.03.2023**
(21) Application number: 21808887.0
(22) Date of filing: 12.02.2021
(51) Int. Cl.: C01B 32/15, B82Y 30/00, B82Y 40/00, C01B 33/40, C09K 11/08, C09K 11/65, C09K 11/70

(54) **COMPOSITION AND METHOD FOR PRODUCING SAME**

(30) Priority: 21.05.2020 JP 2020088985
(71) Applicant: Kureha Corporation, Chuo-ku Tokyo 103-8552 (JP)
(72) Inventor: UCHIDA, Junya, Tokyo 103-8552 (JP); KATSURAO, Takumi, Tokyo 103-8552 (JP); SAKABE, Hiroshi, Tokyo 103-8552 (JP)
(74) Representative: Zimmermann & Partner Patentanwälte mbB
(86) International application number: PCT/JP2021/005142
(87) International publication number: WO 2021/235024

(57) **Abstract**

An object is to provide a composition containing a boron-containing carbon quantum dot, the composition being in a solid state at room temperature, having good emission efficiency, and further having high thermal stability at high temperatures.

The composition to achieve the above object contains: a boron-containing carbon quantum dot containing boron as a heteroatom; and a layered clay mineral, and the composition is solid at 25°C and 1 atm.

## Description

### [TECHNICAL FIELD]

The present invention relates to a composition containing a boron-containing carbon quantum dot containing a boron atom as a heteroatom, the composition being in a solid state at room temperature, and a method of producing the same.

### [BACKGROUND ART]

Carbon quantum dots are stable carbon-based nanoparticles with a particle size of approximately a few nm to several tens of nm. Carbon quantum dots exhibit good fluorescence properties and thus are expected to be used as photonics materials, such as those of solar cells, displays, and security inks. In addition, carbon quantum dots have low toxicity and high biocompatibility and thus are also expected to be applied to medical fields, such as bioimaging.

To impart various functions to carbon quantum dots, boron-containing carbon quantum dots in which a carbon quantum dot is doped with a boron atom have been proposed in the art. For example, Patent Document 1 describes a glucose sensor using a boron-containing carbon quantum dot, and Patent Document 2 describes an imaging reagent. Furthermore, Patent Document 3 discloses a hydrogen-producing photocatalyst using a boron-containing carbon quantum dot.

### [CITATION LIST]

### [PATENT DOCUMENT]

Patent Document 1: CN 103881708 A
Patent Document 2: US 2019/0184037 A
Patent Document 3: CN 105329876 A

### [SUMMARY OF INVENTION]

### [TECHNICAL PROBLEM]

However, the boron-containing carbon quantum dots of Patent Documents 1 to 3 above are all dispersed in a solvent. Using these boron-containing carbon quantum dot in a solid state has a problem of causing aggregation and reducing emission efficiency. Furthermore, to use boron-containing carbon quantum dots in various environments, boron-containing carbon quantum dots are required to be stable not only at room temperature but also at high temperatures. However, in boron-containing carbon quantum dots in the art, deterioration or degradation is likely to proceed at high temperatures, which also tends to reduce emission efficiency.

The present invention has been made in view of the above problems. An object of the present application is to provide a composition containing a boron-containing carbon quantum dot, the composition being in a solid state at room temperature, having good emission efficiency, and further having high thermal stability at high temperatures.

### [SOLUTION TO PROBLEM]

The present invention provides the following composition:
a composition containing:
a boron-containing carbon quantum dot containing boron as a heteroatom; and
a layered clay mineral, and
the composition being solid at 25°C and 1 atm.

The present invention also provides the following method of producing a composition:
a method of producing a composition, the method including:
   preparing a mixture of an organic compound having a reactive group, a boron compound, and a layered clay mineral; and
heating the mixture to obtain a composition containing:
   a boron-containing carbon quantum dot containing boron as a heteroatom, and
   a layered clay mineral.

The present invention also provides the following method of producing a composition:
a method of producing a composition, the method including:
preparing a mixture of an organic compound having a reactive group and a boron compound;
heating the mixture to obtain a boron-containing carbon quantum dot containing boron as a heteroatom; and
mixing the boron-containing carbon quantum dot and a layered clay mineral.

### [ADVANTAGEOUS EFFECTS OF INVENTION]

The composition according to an embodiment of the present invention contains a boron-containing carbon quantum dot and is in a solid state at room temperature, has good emission efficiency, and further has high thermal stability at high temperatures. Thus, the composition can be used in various applications.

### [BRIEF DESCRIPTION OF THE DRAWINGS]

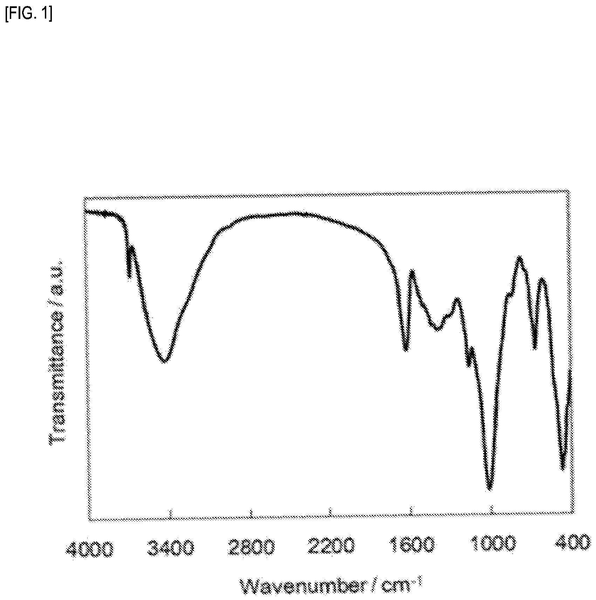

FIG. 1 is a graph showing an infrared absorption spectrum of a composition prepared in Example 7.

### [DESCRIPTION OF EMBODIMENTS]

In the present specification, numerical ranges indicated by "to" refer to numerical ranges including the numerical values described before and after "to".

A composition according to an embodiment of the present invention contains:
a boron-containing carbon quantum dot containing boron as a heteroatom; and
a layered clay mineral. The composition is solid at 25°C and 1 atm. In the present specification, the boron-containing carbon quantum dot refers to a quantum dot containing mainly carbon and having a particle size of 1 to 100 nm, in which a part of the carbon chain or carbon ring in the quantum dot is substituted by boron. The presence or absence of the boron can be determined, for example, by Fourier transform infrared spectroscopy or X-ray electron spectroscopy.

As described above, boron-containing carbon quantum dots, when turned into solids, are likely to aggregate and have a reduced quantum yield. Furthermore, boron-containing carbon quantum dots do not have sufficient heat resistance and are susceptible to deterioration or degradation at high temperatures, and thus are likely to have reduced emission properties.

On the contrary, the composition according to an embodiment of the present invention contains a layered clay mineral together with a solid-state boron-containing carbon quantum dot. Thus, the boron-containing carbon quantum dot is less likely to aggregate and exhibits high heat resistance. The reason for this is uncertain but is presumed as follows.

The layered clay mineral has an ion between the layers and exhibits polarity. On the other hand, the boron-containing carbon quantum dot into which a boron atom is introduced as a heteroatom also exhibits polarity due to boron. When thoroughly mixing such a layered clay mineral and boron-containing carbon quantum dots, the boron-containing carbon quantum dots are in a state of being supported by the layered clay mineral, that is, a state where the boron-containing carbon quantum dots are finely dispersed in the layered clay mineral. Thus, this is presumed to increase the solid-state emission quantum yield (solid-state fluorescence quantum yield).

In addition, the boron-containing carbon quantum dot and the layered clay mineral interact, which prevents movement of the molecules in the boron-containing carbon quantum dot to some extent. Furthermore, the boron-containing carbon quantum dot is finely dispersed, which prevents reaction between a plurality of boron-containing carbon quantum dots. Thus, even when heat is applied to the composition, the boron-containing carbon quantum dot is presumed to be less susceptible to the degradation reaction, highly increasing the heat resistance.

Here, the composition according to an embodiment of the present invention contains the boron-containing carbon quantum dot and the layered clay mineral but may further contain a surfactant to enhance dispersibility, an emitting body other than the boron-containing carbon quantum dot, or the like in a range that does not impair the object and effects of the present invention.

### Boron-containing carbon quantum dot

As described above, the boron-containing carbon quantum dot contained in the composition according to an embodiment of the present invention contains a boron atom as a heteroatom. The amount of boron atoms contained in the boron-containing carbon quantum dot is preferably from 0.1 to 60 mass% and more preferably from 1 to 50 mass% relative to the amount of all atoms in the boron-containing carbon quantum dot. The boron-containing carbon quantum dot containing boron atoms in the above range is more likely to have polarity and has increased affinity with the layered clay mineral. This in turn is more likely to increase the quantum yield of the composition. The amount of boron atoms can be determined by X-ray photoelectron spectroscopy. The amount of boron atoms can be adjusted by the ratio of the amount of the boron compound used in the production of the boron-containing carbon quantum dot and the amount of the organic compound containing carbon, or the like. The method for preparing the boron-containing carbon quantum dot will be described in detail later.

Here, the boron-containing carbon quantum dot may further contain an atom other than the boron atom as a heteroatom. Examples of the heteroatom contained in the boron-containing carbon quantum dot include a nitrogen atom, a phosphorus atom, a sulfur atom, a silicon atom, and a fluorine atom. The boron-containing carbon quantum dot may contain only one of these or may contain two or more of these.

The heteroatom other than the boron atom can be incorporated by heating a compound containing an element of these together with a boron compound or an organic compound containing carbon when the boron-containing carbon quantum dot is prepared. In addition, a compound containing an element of these may be used as the organic compound or the boron compound.

The amount of the heteroatom other than the boron atom in the boron-containing carbon quantum dot is preferably from 1 to 100 mol% and more preferably from 20 to 70 mol% relative to the amount of boron atoms in the boron-containing carbon quantum dot. When the amount of the heteroatom other than the boron atom is in the above range, for example, the emission wavelength or the like of the boron-containing carbon quantum dot can be adjusted to a desired range. The amount of the heteroatom other than the boron atom can be determined by X-ray photoelectron spectroscopy. The amount of the heteroatom other than the boron atom can be adjusted by the amount of the compound used in the production of the boron-containing carbon quantum dot.

In addition, the boron-containing carbon quantum dot preferably has a surface functional group, and the surface functional group preferably has a structure derived from at least one compound selected from the group consisting of boronic acid, borinic acid, borate esters, boronate esters, and borinate esters. The structure of the surface functional group can be determined, for example, by Fourier transform infrared spectroscopy.

A surface functional group of these contained in the boron-containing carbon quantum dot allows the boron-containing carbon quantum dot and in turn the composition to have good dispersibility in a solvent or the like and facilitates the use in various applications. The type of surface functional group contained in the boron-containing carbon quantum dot can be identified, for example, by an IR spectrum. In addition, the functional group contained in the boron-containing carbon quantum dot is derived from the structure of the compound containing boron or the structure of the organic compound containing carbon used in the preparation of the boron-containing carbon quantum dot. The functional group can be selected by appropriate selection of these.

Here, the emission wavelength of the boron-containing carbon quantum dot is not particularly limited, but the maximum emission wavelength is preferably from 350 to 650 nm and more preferably from 440 to 600 nm. The boron-containing carbon quantum dot with a maximum emission wavelength in the visible light range facilitates the use of the composition according to an embodiment of the present invention in various applications. The emission wavelength and the structure of the boron-containing carbon quantum dot are determined depending on a raw material for the boron-containing carbon quantum dot, the size of the boron-containing carbon quantum dot, the type of layered clay mineral, the average interlayer spacing of the layered clay mineral.

The height of the boron-containing carbon quantum dot in a cross section when it is observed with an atomic force microscope (AFM) is preferably from 1 to 100 nm and more preferably from 1 to 80 nm. The boron-containing carbon quantum dot with the size in the above range is likely to have sufficient characteristics of a quantum dot.

In addition, the amount of the boron-containing carbon quantum dot in the composition is preferably from 1 to 80 mass% and more preferably from 10 to 75 mass%. When the amount of the boron-containing carbon quantum dot in the composition is in the above range, sufficient emission can be obtained from the composition. Furthermore, the boron-containing carbon quantum dot contained in the above range is less likely to aggregate in the composition and increases the stability of the composition.

### Layered clay mineral

The layered clay mineral is a laminate of crystal layers in which silicon, aluminum, oxygen, and the like are arranged in a prescribed structure, and typically, water and a metal ion, potassium and magnesium, water, an organic material, and the like are incorporated in between the crystal layers. The layered clay mineral may be an anion exchange layered clay mineral or a cation exchange layered clay mineral.

Examples of the layered clay mineral include a smectite, a layered double hydroxide, a kaolinite, and a mica. Preferred among these is a smectite or a layered double hydroxide in terms of having an average interlayer spacing appropriate for supporting the boron-containing carbon quantum dot.

The smectite is a clay mineral that swells with water or the like, and examples include saponite, montmorillonite, hectorite, beidellite, nontronite, sauconite, and stevensite.

On the other hand, the layered double hydroxide is a double hydroxide obtained by forming a solid solution of a divalent metal oxide and a trivalent metal ion, and examples thereof include hydrotalcite, hydrocalumite, hydromagnesite, and pyroaurite.

The layered clay mineral may be a natural product or an artificial product. In addition, the layered clay mineral may be a product in which a hydroxy group contained in the crystal layer is substituted by fluorine. Furthermore, the layered clay mineral may be a product in which an interlayer ion is substituted by an alkali metal ion, an alkaline earth metal ion, an aluminum ion, an iron ion, an ammonium ion, or the like. Moreover, the layered clay mineral may be modified with an organic material of various types and may be, for example, a smectite chemically modified with a quaternary ammonium salt compound or a quaternary pyridinium salt compound.

The amount of the layered clay mineral in the composition is preferably from 20 to 99 mass% and more preferably from 25 to 90 mass%. With the amount of the layered clay mineral in the above range, the amount of the boron-containing carbon quantum dot is relatively sufficiently large, and a sufficient amount of emission can be obtained. In addition, the layered clay mineral contained in the above range can sufficiently support the boron-containing carbon quantum dot and facilitates obtaining good dispersibility of the boron-containing carbon quantum dot.

### Method for preparing composition

Examples of a method for preparing the composition containing the boron-containing carbon quantum dot and the layered clay mineral include the following two methods. However, the method for preparing the composition is not limited to these methods.

### (1) First preparation method

A first preparation method includes:
preparing a mixture of an organic compound having reactivity, a boron compound, and a layered clay mineral (mixture preparation); and
heating the mixture to obtain the composition described above (heat treatment). The method produces a boron-containing carbon quantum dot in the presence of a layered clay mineral. Thus, the method has advantages in that using the interlayer space of the layered clay mineral as a template facilitates the adjustment of the size of the boron-containing carbon quantum dot and this is likely to increase the solid-state fluorescence quantum yield of the resulting composition. Each step will be described below.

### (1-1) Mixture preparation

In the mixture preparation, an organic compound having reactivity, a boron compound, and a layered clay mineral are mixed. The organic compound is any compound that has a reactive group and can produce a carbon quantum dot by carbonization and is not particularly limited. In the present specification, the "reactive group" is a group for causing polycondensation reaction or the like of the organic compound in the heat treatment described later and is a group contributing to formation of a main backbone of the boron-containing carbon quantum dot. Some of these reactive groups may remain in the boron-containing carbon quantum dot. Examples of the reactive group include a carboxy group, a hydroxy group, an epoxy group, an amide group, a sulfo group, and an amino group. The organic compound may contain a component that is to be a heteroatom other than the boron atom (e.g., such as a phosphorus atom, a sulfur atom, a silicon atom, or a fluorine atom) in the boron-containing carbon quantum dot. In the mixture preparation, two or more organic compounds may be mixed with the layered clay mineral. In this case, a plurality of organic compounds preferably has a group that is readily react to each other.

Examples of the organic compound having a reactive group include carboxylic acids, alcohols, phenols, amine compounds, and saccharides. The organic compound may be in a solid or liquid state at normal temperature.

The carboxylic acid is any compound having one or more carboxy groups in the molecule (however, except those corresponding to phenols, amine compounds, or saccharides). Examples of the carboxylic acid include monocarboxylic acids, such as formic acid, acetic acid, 3-mercaptopropionic acid, and α-lipoic acid; polyvalent carboxylic acids that are divalent or higher, such as oxalic acid, malonic acid, succinic acid, maleic acid, fumaric acid, itaconic acid, polyacrylic acid, (ethylenedithio)diacetic acid, thiomalic acid, and tetrafluoroterephthalic acid; and hydroxy acids, such as citric acid, glycolic acid, lactic acid, tartaric acid, malic acid, and 5-sulfosalicylic acid.

The alcohol is any compound having one or more hydroxy groups (however, except those corresponding to carboxylic acids, phenols, amine compounds, or saccharides). Examples of the alcohol include polyhydric alcohols, such as ethylene glycol, glycerol, erythritol, pentaerythritol, ascorbic acid, and polyethylene glycol.

The phenol is any compound having a structure in which a hydroxy group is attached to a benzene ring. Examples of the phenol include phenol, catechol, resorcinol, hydroquinone, phloroglucinol, pyrogallol, 1,2,4-trihydroxybenzene, gallic acid, tannin, lignin, catechin, anthocyanin, rutin, chlorogenic acid, lignan, and curcumin.

Examples of the amine compound include 1,2-phenylenediamine, 1,3-phenylenediamine, 1,4-phenylenediamine, 2,6-diaminopyridine, urea, thiourea, ammonium thiocyanate, ethanolamine, 1-amino-2-propanol, melamine, cyanuric acid, barbituric acid, folic acid, ethylenediamine, diethylenetriamine, triethylenetetramine, polyethyleneimine, dicyandiamide, guanidine, aminoguanidine, formamide, glutamic acid, aspartic acid, cysteine, arginine, histidine, lysine, glutathione, RNA, DNA, cysteamine, methionine, homocysteine, taurine, thiamine, N-[3-(trimethoxysilyl)propyl]ethylenediamine, and 4,5-difluoro-1,2-phenylenediamine.

Examples of the saccharide include glucose, sucrose, glucosamine, cellulose, chitin, and chitosan.

Among those described above, preferred is an organic compound that allows condensation reaction to proceed efficiently, and a preferred example include a carboxylic acid, a phenol, an amine compound, or a combination of a carboxylic acid and an amine compound.

On the other hand, examples of the boron compound containing boron include boron, boric acid, sodium tetraborate, boric oxide, trimethyl borate, triethyl borate, trioctadecyl borate, triphenyl borate, 2-ethoxy-4,4,5,5-tetramethyl-1,3,2-dioxaborolane, triethanolamine borate, 2,4,6-trimethoxyboroxine, 2,4,6-triphenylboroxine, tris(trimethylsilyl) borate, tris(2-cyanoethyl) borate, 3-aminophenylboronic acid, 2-anthratheneboronic acid, 9-anthratheneboronic acid, phenylboronic acid, 3,5-bis(trifluoromethyl)phenylboronic acid, 4,4'-biphenyldiboronic acid, 2-bromophenylboronic acid, 4-bromo-1-naphthaleneboronic acid, 3-bromo-2-fluorophenylboronic acid, 4-carboxyphenylboronic acid, 3-cyanophenylboronic acid, 4-cyano-3-fluorophenylboronic acid, 3,5-difluorophenylboronic acid, 4-(diphenylamino)phenylboronic acid, 3-fluorophenylboronic acid, 3-hydroxyphenylboronic acid, 4-mercaptophenylboronic acid, 1-naphthaleneboronic acid, 9-phenanthreneboronic acid, 1,4-phenylenediboronic acid, 1-pyreneboronic acid, 2-aminopyrimidine-5-boronic acid, 2-bromopyridine-3-boronic acid, 2-fluoropyridine-3-boronic acid, 4-pyridylboronic acid, quinoline-8-boronic acid, 4-aminophenylboronic acid pinacol, 3-hydroxyphenylboronic acid pinacol, 4-(4,4,5,5-tetramethyl-1,3,2-dioxaborolan-2-yl)pyridine, diboronic acid, sodium borohydride, sodium tetrafluoroborate, 1-ethyl-3-methylimidazolium tetrafluoroborate, boron trifluoride, and boron tribromide.

Among these, the boron compound containing boron is preferably boric acid, sodium tetraborate, trimethyl borate, triethanolamine borate, 3-aminophenylboronic acid, phenylboronic acid, 3-cyanophenylboronic acid, 3-hydroxyphenylboronic acid, 4-mercaptophenylboronic acid, 1,4-phenylenediboronic acid, 4-pyridylboronic acid, diboronic acid, 1-ethyl-3-methylimidazolium tetrafluoroborate, boron trifluoride, or boron tribromide.

The mixing ratio of the organic compound and the boron compound is appropriately selected according to a desired boron content in the boron-containing carbon quantum dot.

The boron-containing carbon quantum dot may contain a heteroatom other than the boron atom as described above, and in the present step, a compound containing an atom other than the boron atom (e.g., such as a nitrogen atom, a phosphorus atom, a sulfur atom, a silicon atom, or a fluorine atom) (hereinafter also referred to as an "additional compound") may be mixed with the organic compound and the boron compound.

Examples of the compound containing nitrogen include imidazole, 1,2,4-triazine, 1,3,5-triazine, 1,2,3-triazole, and 1,2,4-triazole in addition to the amine compounds described above.

Examples of the compound containing phosphorus include elemental phosphorus, phosphoric acid, phosphorus oxide, 1-hydroxyethane-1,1-diphosphonic acid, phytic acid, ammonium phosphate, diammonium hydrogen phosphate, ammonium dihydrogen phosphate, O-phosphorylethanolamine, phosphorus chloride, phosphorus bromide, triethyl phosphonoacetate, tetrakis(hydroxymethyl)phosphonium chloride, methyl phosphate, triethyl phosphite, O-phosphoserine, nitrilotris(methylenephosphonic acid), N,N,N',N'-ethylenediaminetetrakis(methylenephosphonic acid), adenosine 5'-triphosphate, 2-phosphonobutane-1,2,4-tricarboxylic acid, guanidine phosphate, and guanylurea phosphate.

In addition, examples of the compound containing sulfur include sulfur, sodium thiosulfate, sodium sulfide, sodium sulfate, sulfuric acid, methanesulfonic acid, lignin sulfonic acid, p-toluenesulfonic acid, sulfanilic acid, and sodium hydrosulfide; examples of the compound containing silicon include tetrachlorosilane, 3-aminopropyltriethoxysilane, 1-(trimethylsilyl)imidazole, and tetraethoxysilane; and furthermore, examples of the compound containing fluorine include 2,2,3,3,4,4-hexafluoro-1,5-pentanediol diglycidyl ether, 2-(perfluorohexyl)ethanol, and sodium fluoride.

The mixing ratio of the organic compound, the boron compound, and the additional compound is appropriately selected according to a desired boron content or the amount of heteroatom other than the boron atom in the boron-containing carbon quantum dot.

On the other hand, the layered clay mineral to be combined with the organic compound, the boron compound, and the additional compound is the same as the layered clay mineral described above (the layered clay mineral contained in the composition). The layered clay mineral is preferably selected according to the type of reactive group contained in the organic compound, the type of boron compound, and the desired emission wavelength of the boron-containing carbon quantum dot, that is, the desired particle size of the boron-containing carbon quantum dot. For example, an anion exchange layered clay mineral may be selected, or a cation exchange layered clay mineral may be selected.

On the other hand, the average interlayer spacing of the layered clay mineral to be combined with the organic compound and the boron compound is appropriately selected according to the molecular structure of the organic compound, the molecular structure of the boron compound, the desired particle size of the boron-containing carbon quantum dot, or the like but is preferably from 0.1 to 10 nm and more preferably from 0.1 to 8 nm. The average interlayer spacing of the layered clay mineral can be analyzed with an X-ray diffractometer or the like. The average interlayer spacing of the layered clay mineral refers to a spacing between the bottom surface of one of the adjacent crystal layers and the top surface of the other one of the adjacent crystal layers in the layered clay mineral. As described above, in the first preparation method, the boron-containing carbon quantum dot is synthesized using the interlayer space of the layered clay mineral as a template. Thus, the layered clay mineral with an average interlayer spacing of 10 nm or less facilitates producing a boron-containing carbon quantum dot with an emission wavelength in a desired range. On the other hand, with an average interlayer spacing of 0.1 nm or greater, a part of the organic compound is likely to enter interlayer space, which facilitates the formation of the carbon quantum dot using the interlayer space of the layered clay mineral as a template.

To adjust the average interlayer spacing of the layered clay mineral, the layered clay mineral may be swelled with water or a solvent of various types. Examples of the organic solvent include methanol, ethanol, hexane, toluene, chloroform, dimethylformamide, and dimethyl sulfoxide. The amount of the solvent in the mixture (the organic compound, the boron compound, the layered clay mineral, and the solvent) is preferably from 10 to 80 mass% and more preferably from 10 to 70 wt.%.

In addition, an acid-treated clay mineral can be used, the acid-treated mineral formed by bringing the layered clay mineral into contact with an acid, such as hydrochloric acid, to substitute sodium ions between the layers with protons.

Here, the method of mixing the organic compound, the boron compound, and the layered clay mineral, as well as the additional compound as necessary is any method that can uniformly mix them and is not particularly limited. For example, they may be mixed while being ground in a mortar, mixed while being pulverized with a ball mill or the like, or mixed by dissolving, blending, or dispersing them in water or an organic solvent. When the organic compound or the boron compound itself is a liquid, other components may be dissolved, blended, or dispersed in the liquid organic or boron compound and mixed. The mixture in a liquid state may be dried or may be used as is in the next step. From the viewpoint of preventing side reactions, the mixture is preferably in a solid state. More preferably, the organic compound, the boron compound, and the layered clay mineral are mixed in a state where all are solid, which is presumed to allow parts of the organic compound and the boron compound to enter the interlayer space of the layered clay mineral and subject adequate amount to the reaction. The interlayer space of the layered clay mineral is narrow, thus making it difficult to form an aggregate of the organic compound and making it easier to prepare carbon quantum dots with a uniform particle size.

In addition, the mixing ratio of the organic compound, the boron compound, and the additional compound to the layered clay mineral is appropriately selected according to the desired content ratio of the boron-containing carbon quantum dot to the layered clay mineral.

### (1-2) Heat treatment

The heat treatment is a step of heating the mixture described above to fire the organic compound and the boron compound together with the layered clay mineral to obtain the composition containing the boron-containing carbon quantum dot and the layered clay mineral. The method for heating the mixture is any method by which the organic compound and the boron compound can be reacted to prepare the boron-containing carbon quantum dot, and is not particularly limited. Examples include a method by heating and a method by microwave irradiation.

When the mixture is heated, the heating temperature is preferably from 70 to 700°C, more preferably from 100 to 500°C, and even more preferably from 100 to 300°C. In addition, the heating time is preferably from 0.01 to 45 hours, more preferably from 0.1 to 30 hours, and even more preferably from 0.5 to 10 hours. The particle size and in turn the emission wavelength of the resulting boron-containing carbon quantum dot can be adjusted by the heating time. Furthermore, here, heating may be performed in a non-oxidizing atmosphere while an inert gas such as nitrogen is circulated.

In a case of microwave irradiation, the wattage is preferably from 1 to 1500 W and more preferably from 1 to 1000 W. In addition, the heating time with a microwave is preferably from 0.01 to 10 hours, more preferably from 0.01 to 5 hours, and even more preferably from 0.01 to 1 hour. The particle size and in turn the emission wavelength of the resulting boron-containing carbon quantum dot can be adjusted by the microwave irradiation time.

The heat treatment provides a composition in which the boron-containing carbon quantum dot and the layered clay mineral are uniformly dispersed. Furthermore, here, the composition may be washed with an organic solvent and purified by removing an unreacted substance or a by-product.

### (2) Second method

A second method for preparing the composition described above includes:
preparing a mixture of an organic compound having a reactive group and a boron compound (mixture preparation);
heating the mixture to obtain a boron-containing carbon quantum dot containing boron as a heteroatom (heat treatment); and
mixing the boron-containing carbon quantum dot and a layered clay mineral (composition preparation). In the method, after a boron-containing carbon quantum dot is prepared, the boron-containing carbon quantum dot is mixed with a layered clay mineral. Also in the method, thoroughly mixing the boron-containing carbon quantum dot and the layered clay mineral enables the boron-containing carbon quantum dots to be finely dispersed in the composition. Each step will be described below.

### (2-1) Mixture preparation

In the mixture preparation, an organic compound having a reactive group and a boron compound containing boron are mixed to prepare a mixture. The additional compound described above may be mixed as necessary. The organic compound, the boron compound, and the additional compound are the same as those used in the first method described above. In addition, the method of mixing the organic compound, the boron compound, and the additional compound is any method that can uniformly mix them and is not particularly limited. For example, they may be mixed while being ground in a mortar, mixed while being pulverized with a ball mill or the like, or mixed by dissolving, blending, or dispersing them in water or an organic solvent. When the organic compound or the boron compound itself is a liquid, other components may be dissolved, blended, or dispersed in the liquid organic or boron compound and mixed. The mixture in a liquid state may be dried or may be used as is in the next step. From the viewpoint of preventing side reactions, the mixture is preferably in a solid state.

In addition, the mixing ratio of the organic compound, the boron compound, and the additional compound is appropriately selected according to the amount of boron and the amount of heteroatom other than the boron atom in the boron-containing carbon quantum dot.

### (2-2) Heat treatment

The heat treatment is a step of heating the mixture prepared in the mixture preparation described above to react the organic compound and the boron compound, thus producing a boron-containing carbon quantum dot. The method for heating the mixture is any method by which the organic compound and the boron compound can be reacted to prepare the boron-containing carbon quantum dot, and is not particularly limited. Examples include a method by heating and a method by microwave irradiation. The method by heating and the method by microwave irradiation are the same as those in the heat treatment in the first preparation method.

### (2-3) Composition preparation

The boron-containing carbon quantum dot obtained in the heat treatment described above and a layered clay mineral are mixed. This provides a carbon quantum dot-containing composition in which the boron-containing carbon quantum dot and the layered clay mineral are uniformly dispersed. The boron-containing carbon quantum dot and the layered clay mineral may be mixed while being ground in a mortar, mixed while being pulverized with a ball mill or the like, or mixed by dispersing them in water or an organic solvent. Water or the organic solvent is removed by drying or the like after mixing.

Furthermore, here, the composition may be washed with an organic solvent and purified by removing an unreacted substance or a by-product.

### Applications

The composition containing the boron-containing carbon quantum dot and the layered clay mineral described above exhibits good emission and is useful as a separating agent for separating a specific substance using a functional group contained in the boron-containing carbon quantum dot. Thus, the composition can be used in various applications.

In addition, the application of the composition described above is not particularly limited, and the composition can be used according to the performance of the carbon quantum dot, for example, in solar cells, displays, security inks, quantum dot lasers, biomarkers, lighting materials, thermoelectric materials, photocatalysts, and separating agents for a specific substance.

The composition described above is solid at 25°C and 1 atm but may be used in various applications in a state of solution where the composition is dispersed in a solvent or the like.

### [EXAMPLES]

Hereinafter, specific examples of the present invention will be described together with comparative examples, but the present invention is not limited to these.

### [Example 1]

### (1) Preparation of composition

In a mortar were ground 1.0 g of saponite (Sumecton SA, available from Kunimine Industries Co., Ltd.), 0.15 g of phloroglucinol dihydrate, and 0.057 g of boric acid. The mixture was placed in a screw-top test tube with an internal volume of 15 mL, and the screw-top test tube was sealed with a screw cap with a rubber packing. The screw-top test tube was then heated at 200°C for 3 hours while nitrogen was circulated in the screw-top test tube, and a composition (complex) containing a boron-containing carbon quantum dot and a layered clay mineral was prepared.

### (2) Evaluation of emission properties

The composition obtained above was sandwiched in KBr plates and pressed, and a measurement sample was prepared. The emission wavelength (maximum emission wavelength) and fluorescence quantum yield of the measurement sample in a solid state were evaluated using a spectrofluorometer FP-8500 (available from JASCO Corporation) equipped with an integrating sphere unit ILF-835. Light with a wavelength at which the fluorescence quantum yield of the composition was maximized was used as the excitation light.

### (3) Evaluation of thermal stability

Thermal stability of the composition was evaluated using a thermogravimetric analyzer TGA2 (available from Mettler Corporation). The measurement was performed at a temperature increase rate of 10°C/min under an air flow at 40 mL/min, and the temperature at which the weight was reduced by 5% from the start of the measurement was determined as the 5% weight loss temperature.

### [Example 2]

In a mortar were ground 0.5 g of hydrotalcite (available from FUJIFILM Wako Pure Chemical Corporation), 0.15 g of citric acid, 0.1 g of dicyandiamide, and 0.048 g of boric acid. The mixture was placed in a screw-top test tube with an internal volume of 15 mL, and the screw-top test tube was sealed with a screw cap with a rubber packing. The screw-top test tube was then heated at 170°C for 1.5 hours while nitrogen was circulated in the screw-top test tube, and a composition (complex) containing a boron-containing carbon quantum dot and a layered clay mineral was prepared. The emission properties and thermal stability of the prepared composition were evaluated in the same manner as in Example 1.

### [Example 3]

In a mortar were ground 0.5 g of saponite, 0.15 g of citric acid, 0.1 g of dicyandiamide, and 0.039 g of sodium tetraborate. The mixture was placed in a screw-top test tube with an internal volume of 15 mL, and the screw-top test tube was sealed with a screw cap with a rubber packing. The screw-top test tube was then heated at 170°C for 1.5 hours while nitrogen was circulated in the screw-top test tube, and a composition (complex) containing a boron-containing carbon quantum dot and a layered clay mineral was prepared. The emission properties and thermal stability of the prepared composition were evaluated in the same manner as in Example 1.

### Evaluation of layered clay mineral content

Elemental analysis of the composition was performed using an X-ray fluorescence spectrometer ZX Primus IV (available from Rigaku Corporation). The intensity of the peak origitating from silicon in 0.1 g of the composition and the peak of the peak origitating from silicon in 0.1 g of saponite used as the raw material were compared and the layered clay mineral content in the composition was evaluated. The results are shown in Table 2.

### [Example 4]

In a mortar were ground 0.15 g of citric acid and 0.048 g of boric acid. The mixture was placed in a flask having an internal volume of 50 mL and equipped with a three-way cook and heated at 170°C for 90 minutes under a nitrogen stream, and a carbon quantum dot was synthesized. Then, 0.01 g of the synthesized carbon quantum dot was weighed and mixed with 0.09 g of saponite by grinding both in a mortar, and a composition was obtained. The emission properties and thermal stability of the prepared composition were evaluated in the same manner as in Example 1. Furthermore, the layered clay mineral content in the composition was evaluated in the same manner as in Example 3. The results are shown in Table 2.

### [Example 5]

In a mortar were ground 0.5 g of saponite, 0.15 g of L-cysteine hydrochloride monohydrate, and 0.055 g of boric acid. The mixture was placed in a screw-top test tube with an internal volume of 15 mL, and the screw-top test tube was sealed with a screw cap with a rubber packing. The screw-top test tube was then heated at 170°C for 1.5 hours while nitrogen was circulated in the screw-top test tube, and a carbon quantum dot-containing composition (complex) containing a boron-containing carbon quantum dot and a layered clay mineral was prepared. The emission properties of the prepared composition were evaluated in the same manner as in Example 1.

### [Example 6]

In a mortar were ground 0.1 g of saponite, 0.015 g of phloroglucinol dihydrate, 0.0057 g of boric acid, and 0.004 g of phosphorus (V) oxide. The mixture was placed in a screw-top test tube with an internal volume of 15 mL, and the screw-top test tube was sealed with a screw cap with a rubber packing. The screw-top test tube was then heated at 200°C for 3 hours while nitrogen was circulated in the screw-top test tube, and a carbon quantum dot-containing composition (complex) containing a boron-containing carbon quantum dot and a layered clay mineral was prepared. The emission properties of the prepared composition were evaluated in the same manner as in Example 1.

### [Example 7]

In a mortar were ground 0.1 g of saponite, 0.04 g of phloroglucinol dihydrate, and 0.015 g of boric acid. The mixture was placed in a screw-top test tube with an internal volume of 15 mL, and the screw-top test tube was sealed with a screw cap with a rubber packing. The screw-top test tube was then heated at 200°C for 3 hours while nitrogen was circulated in the screw-top test tube, and a carbon quantum dot-containing composition (complex) containing a boron-containing carbon quantum dot and a layered clay mineral was prepared. The emission properties of the prepared composition were evaluated in the same manner as in Example 1. In addition, the layered clay mineral content in the composition was evaluated in the same manner as in Example 3. The results are shown in Table 2.

### Evaluation of surface functional group

The composition described above and potassium bromide were ground and mixed in a mortar, and this mixture was pressed to form a potassium bromide tablet. The infrared absorption spectrum of the potassium bromide tablet was measured using a Fourier transform infrared spectrometer FT/IR-4100 (available from JASCO Corporation). The result is shown in FIG. 1. The horizontal axis of the infrared absorption spectrum is wavenumber, and the vertical axis is transmittance.

### [Comparative Example 1]

In a mortar were ground 0.15 g of phloroglucinol dihydrate and 0.057 g of boric acid. The mixture was placed in a screw-top test tube with an internal volume of 15 mL, and the screw-top test tube was sealed with a screw cap with a rubber packing. The screw-top test tube was then heated at 200°C for 3 hours while nitrogen was circulated in the screw-top test tube, and a boron-containing carbon quantum dot was synthesized. The emission properties and thermal stability of the prepared carbon quantum dot were evaluated in the same manner as in Example 1.

### [Comparative Example 2]

In a mortar were ground 0.15 g of citric acid, 0.1 g of dicyandiamide, and 0.048 g of boric acid. The mixture was placed in a screw-top test tube with an internal volume of 15 mL, and the screw-top test tube was sealed with a screw cap with a rubber packing. The screw-top test tube was then heated at 170°C for 1.5 hours while nitrogen was circulated in the screw-top test tube, and a boron-containing carbon quantum dot was synthesized. The emission properties and thermal stability of the prepared carbon quantum dot were evaluated in the same manner as in Example 1.

### [Comparative Example 3]

In a mortar were ground 1.0 g of saponite and 0.15 g of phloroglucinol dihydrate. The mixture was placed in a screw-top test tube with an internal volume of 15 mL, and the screw-top test tube was sealed with a screw cap with a rubber packing. The screw-top test tube was then heated at 200°C for 3 hours while nitrogen was circulated in the screw-top test tube, and a carbon quantum dot-containing composition (complex) containing a carbon quantum dot and a layered clay mineral was prepared. The emission properties and thermal stability of the prepared composition were evaluated in the same manner as in Example 1.

### [Comparative Example 4]

In a screw-top test tube with an internal volume of 15 mL was placed 0.15 g of phloroglucinol dihydrate, and the screw-top test tube was sealed with a screw cap with a rubber packing. The screw-top test tube was then heated at 200°C for 3 hours while nitrogen was circulated in the screw-top test tube, and a carbon quantum dot was synthesized.

### [Comparative Example 5]

In a mortar were ground 0.15 g of citric acid and 0.048 g of boric acid. The mixture was placed in a flask having an internal volume of 50 mL and equipped with a three-way cook and heated at 170°C for 90 minutes under a nitrogen stream, and a carbon quantum dot was synthesized. The emission properties and thermal stability of the prepared composition were evaluated in the same manner as in Example 1.

### [Comparative Example 6]

In a mortar were ground 0.15 g of citric acid, 0.1 g of dicyandiamide, and 0.039 g of sodium tetraborate. The mixture was placed in a screw-top test tube with an internal volume of 15 mL, and the screw-top test tube was sealed with a screw cap with a rubber packing. The screw-top test tube was then heated at 170°C for 1.5 hours while nitrogen was circulated in the screw-top test tube, and a boron-containing carbon quantum dot was synthesized. The emission properties and thermal stability of the prepared composition were evaluated in the same manner as in Example 1.

### [Comparative Example 7]

In a mortar were ground 0.15 g of L-cysteine hydrochloride monohydrate and 0.055 g of boric acid. The mixture was placed in a screw-top test tube with an internal volume of 15 mL, and the screw-top test tube was sealed with a screw cap with a rubber packing. The screw-top test tube was then heated at 170°C for 1.5 hours while nitrogen was circulated in the screw-top test tube, and a boron-containing carbon quantum dot was synthesized. The emission properties of the prepared composition were evaluated in the same manner as in Example 1.

### Comparative Example 8

In a screw-top test tube with an internal volume of 15 mL, 1.0 g of saponite was impregnated with 0.15 g of furfuryl alcohol (liquid), and the screw-top test tube was sealed with a screw cap with a rubber packing. The screw-top test tube was then heated at 200°C for 3 hours while nitrogen was circulated in the screw-top test tube, and a carbon quantum dot-containing composition (complex) containing a carbon quantum dot and a layered clay mineral was prepared. The emission properties of the prepared composition were evaluated in the same manner as in Example 1.

**Table 1-1**

| | Carbon quantum dot (raw material) | Layered clay mineral | Mixing method |
|---|---|---|---|
| Example 1 | Boron-containing carbon quantum dot (phloroglucinol + boric acid) | Saponite | Added before heat treatment |
| Example 2 | Boron-containing carbon quantum dot (citric acid + dicyandiamide + boric acid) | Hydrotalcite | Added before heat treatment |
| Example 3 | Boron-containing carbon quantum dot (citric acid + dicyandiamide + sodium tetraborate) | Saponite | Added before heat treatment |
| Example 4 | Boron-containing carbon quantum dot (citric acid + boric acid) | Saponite | Added after heat treatment |
| Example 5 | Boron-containing carbon quantum dot (L-cysteine + boric acid) | Saponite | Added before heat treatment |
| Example 6 | Boron-containing carbon quantum dot (phloroglucinol + boric acid + phosphorus oxide) | Saponite | Added before heat treatment |
| Example 7 | Boron-containing carbon quantum dot (phloroglucinol + boric acid) | Saponite | Added before heat treatment |
| Comparative Example 1 | Carbon quantum dot (phloroglucinol + boric acid) | - | - |
| Comparative Example 2 | Boron-containing carbon quantum dot (citric acid + dicyandiamide + boric acid) | - | - |
| Comparative Example 3 | Carbon quantum dot (phloroglucinol) | Saponite | Added before heat treatment |
| Comparative Example 4 | Carbon quantum dot (phloroglucinol) | - | - |
| Comparative Example 5 | Boron-containing carbon quantum dot (citric acid + boric acid) | - | - |
| Comparative Example 6 | Boron-containing carbon quantum dot (citric acid + dicyandiamide + sodium tetraborate) | - | - |
| Comparative Example 7 | Boron-containing carbon quantum dot (L-cysteine + boric acid) | - | - |
| Comparative Example 8 | Carbon quantum dot (furfuryl alcohol) | Saponite | Added before heat treatment |

**Table 1-2**

| | Maximum emission wavelength | Solid-state emission quantum yield | Excitation wavelength | 5% weight loss temperature |
|---|---|---|---|---|
| Example 1 | 547 nm | 16% | 500 nm | 446°C |
| Example 2 | 453 nm | 13% | 360 nm | 262°C |
| Example 3 | 537 nm | 12% | 440 nm | 286°C |
| Example 4 | 469 nm | 9% | 380 nm | 255°C |
| Example 5 | 444 nm | 13% | 380 nm | - |
| Example 6 | 557 nm | 10% | 500 nm | - |
| Example 7 | 570 nm | 7% | 500 nm | - |
| Comparative Example 1 | 620 nm | < 1% | 540 nm | 213°C |
| Comparative Example 2 | 561 nm | 2% | 480 nm | 210°C |
| Comparative Example 3 | 543 nm | 3% | 440 nm | 376°C |
| Comparative Example 4 | No emission | - | - | 238°C |
| Comparative Example 5 | 532 nm | 5% | 400 nm | 112°C |
| Comparative Example 6 | 578 nm | 1% | 500 nm | 234°C |
| Comparative Example 7 | 577 nm | 2% | 500 nm | - |
| Comparative Example 8 | No emission | - | - | - |

**[Table 2]**

| | Carbon quantum dot (raw material) | | Layered clay mineral | |
|---|---|---|---|---|
| | Type | Content | Type | Content |
| Example 3 | Boron-containing carbon quantum dot (citric acid + dicyandiamide + sodium tetraborate) | 34 wt. % | Saponite | 66 wt. % |
| Example 4 | Boron-containing carbon quantum dot (citric acid + boric acid) | 10 wt.% | Saponite | 90 wt. % |
| Example 7 | Boron-containing carbon quantum dot (phloroglucinol + boric acid) | 25 wt. % | Saponite | 75 wt. % |

As shown in Table 1 above, in Examples 1 to 7 containing a boron-containing carbon quantum dot and a layered clay mineral, the solid-state fluorescence quantum yield was high regardless of the mixing method for the boron-containing carbon quantum dot and the layered clay mineral.

For example, in comparison of Comparative Example 1 composed only of a boron-containing carbon quantum dot and Comparative Example 3 containing a carbon quantum dot (containing no boron) and a layered clay mineral, the boron-containing carbon quantum dot has lower solid-state fluorescence quantum yield and further much lower heat resistance. However, in Example 1, in which the boron-containing carbon quantum dot is mixed with saponite, the heat resistance is very high, and the solid-state fluorescence quantum yield is also high. It can be said that mixed with the layered clay mineral, the boron-containing carbon quantum dot had increased stability and further increased heat resistance. In addition, the comparison of Comparative Example 2 and Example 2, comparison of Example 3 and Comparative Example 6, comparison of Example 4 and Comparative Example 5, and further comparison of Example 5 and Comparative Example 7 also showed similar results. On the other hand, emission could not be observed in the carbon quantum dot of Comparative Example 4.

In addition, emission could not be observed in the composition containing a carbon quantum dot (containing no boron) and a layered clay mineral prepared using a raw material in a liquid state at room temperature (furfuryl alcohol) (Comparative Example 8).

Furthermore, as shown in FIG. 1, an absorption peak considered to originate from the B-O bond of the borate ester was observed at or near 1387 cm⁻¹ in the infrared absorption spectrum of the composition prepared in Example 7. This is considered to indicate the presence of a borate ester as the surface functional group of the boron-containing carbon quantum dot.

Moreover, in Examples 3, 4, and 7, the amount of the layered clay mineral was from 20 to 99 mass% relative to the amount of the composition as shown in Table 2, and the solid-state emission quantum yield was high in all these examples.

### [Examples 8 and 9]

Saponite, citric acid (not used in Example 9), dicyandiamide, and boric acid were weighed according to the mass ratios shown in Table 3, mixed, and ground in a mortar. The mixture was placed in a screw-top test tube with an internal volume of 15 mL, and the screw-top test tube was sealed with a screw cap with a rubber packing. The screw-top test tube was then heated at a temperature for a duration shown in Table 3 while nitrogen was circulated in the screw-top test tube, and a composition (complex) containing a boron-containing carbon quantum dot and a layered clay mineral was prepared. The emission properties of the prepared composition were evaluated in the same manner as in Example 1.

### [Examples 10 to 14]

### (1) Preparation of acid-treated clay mineral

In 250 mL of ion-exchanged water, 5.0 g of saponite (Sumecton SA, available from Kunimine Industries Co., Ltd.) was dispersed, and hydrochloric acid was added under stirring to adjust the pH to 4. The aqueous dispersion was allowed to stand for 3 days. The aqueous dispersion was then centrifuged at 1300 rpm for 10 minutes, the resulting gel-like solid was redispersed in ion-exchanged water, and centrifuged again. This operation was repeated. The collected gel-like solid was dried under vacuum at 90°C, and a white solid (hereinafter referred to as an acid-treated saponite) was obtained.

### (2) Preparation of composition

The acid-treated saponite prepared as described above, citric acid (not used in Example 14), dicyandiamide, and boric acid were weighed according to the mass ratios shown in Table 3, mixed, and ground in a mortar. The mixture was placed in a screw-top test tube with an internal volume of 15 mL, and the screw-top test tube was sealed with a screw cap with a rubber packing. The screw-top test tube was then heated at a temperature for a time shown in Table 3 while nitrogen was circulated in the screw-top test tube, and a composition (complex) containing a boron-containing carbon quantum dot and a layered clay mineral was prepared. The emission properties of the prepared composition were evaluated in the same manner as in Example 1.

**[Table 3-1]**

| | Raw materials of boron-containing carbon quantum dot | Layered clay mineral | Heating method |
|---|---|---|---|
| Example 8 | 0.03 g of citric acid + 0.02 g of dicyandiamide + 0.048 g of boric acid | 0.1 g of saponite | 170°C |
| | | | 1.5 hours |
| Example 9 | 0.02 g of dicyandiamide + 0.048 g of boric acid | 0.1 g of saponite | 200°C |
| | | | 3 hours |
| Example 10 | 0.03 g of citric acid + 0.02 g of dicyandiamide + 0.024 g of boric acid | 0.1 g of acid-treated saponite | 170°C |
| | | | 1.5 hours |
| Example 11 | 0.03 g of citric acid + 0.02 g of dicyandiamide + 0.048 g of boric acid | 0.1 g of acid-treated saponite | 170°C |
| | | | 1.5 hours |
| Example 12 | 0.03 g of citric acid + 0.02 g of dicyandiamide + 0.096 g of boric acid | 0.1 g of acid-treated saponite | 170°C |
| | | | 1.5 hours |
| Example 13 | 0.03 g of citric acid + 0.02 g of dicyandiamide + 0.192 g of boric acid | 0.1 g of acid-treated saponite | 170°C |
| | | | 1.5 hours |
| Example 14 | 0.02 g of dicyandiamide + 0.048 g of boric acid | 0.1 g of acid-treated saponite | 200°C |
| | | | 3 hours |

**[Table 3-2]**

| | Maximum emission wavelength | Solid-state emission quantum yield | Excitation wavelength |
|---|---|---|---|
| Example 8 | 475 nm | 44% | 400 nm |
| Example 9 | 377 nm | 35% | 340 nm |
| Example 10 | 520 nm | 19% | 400 nm |
| Example 11 | 515 nm | 63% | 460 nm |
| Example 12 | 455 nm | 72% | 420 nm |
| Example 13 | 475 nm | 80% | 440 nm |
| Example 14 | 364 nm | 41% | 340 nm |

As shown in Table 3, the solid-state emission quantum yield tended to increase with increasing content of boric acid charged, and furthermore, the acid-treated saponite (Examples 10 to 14) tended to has increased solid-state emission quantum yield over the untreated saponite (Examples 8 and 9).

The present application claims priority to JP 2020-088985 filed on May 21, 2020. The contents described in the specification of this application are all incorporated in the specification of the present application.

### [INDUSTRIAL APPLICABILITY]

The composition of the present invention has good emission efficiency of a boron-containing carbon quantum dot and further has high thermal stability at high temperatures. Thus, the composition can be used in various applications.

## Claims

1. A composition comprising:
a boron-containing carbon quantum dot containing boron as a heteroatom; and
a layered clay mineral, and
the composition being solid at 25°C and 1 atm.

2. The composition according to claim 1, wherein
the boron-containing carbon quantum dot further comprises as a heteroatom at least one element selected from the group consisting of phosphorus, sulfur, silicon, and fluorine.

3. The composition according to claim 1 or 2, wherein
the layered clay mineral comprises either a smectite or a layered double hydroxide.

4. The composition according to any one of claims 1 to 3, wherein
an amount of the layered clay mineral is 20 mass% or higher and 99 mass% or lower.

5. The composition according to any one of claims 1 to 4, wherein
the composition has a maximum emission wavelength of 380 nm or higher and 650 nm or lower.

6. The composition according to any one of claims 1 to 5, wherein
the boron-containing carbon quantum dot comprises a surface functional group, and
the surface functional group comprises a structure derived from at least one compound selected from the group consisting of boronic acid, borinic acid, borate esters, boronate esters, and borinate esters.

7. A method of producing a composition, the method comprising:
preparing a mixture of an organic compound having a reactive group, a boron compound, and a layered clay mineral; and
heating the mixture to obtain a composition containing:
a boron-containing carbon quantum dot containing boron as a heteroatom, and
a layered clay mineral.

8. A method of producing a composition, the method comprising:
preparing a mixture of an organic compound having a reactive group and a boron compound;
heating the mixture to obtain a boron-containing carbon quantum dot containing boron as a heteroatom; and
mixing the boron-containing carbon quantum dot and a layered clay mineral.
